# EUROPÄISCHE PATENTSCHRIFT

(11) **EP 3 744 046 B1**
(45) Veröffentlichungstag und Bekanntmachung des Hinweises auf die Patenterteilung: **14.06.2023**
(21) Anmeldenummer: 18825994.9
(22) Anmeldetag: 18.12.2018
(51) Int. Cl.: H04L 12/40, H04L 1/18, H04L 1/00

(54) **TEILNEHMERSTATION FÜR EIN SERIELLES BUSSYSTEM UND VERFAHREN ZUR FEHLERSIGNALISIERUNG FÜR EINE IN EINEM SERIELLEN BUSSYSTEM EMPFANGENE NACHRICHT**
SUBSCRIBER STATION FOR A SERIAL BUS SYSTEM, AND METHOD FOR FAULT SIGNALLING FOR A MESSAGE RECEIVED IN A SERIAL BUS SYSTEM
STATION PÉRIPHÉRIQUE D'UN SYSTÈME DE BUS SÉRIE ET PROCÉDÉ DE SIGNALISATION D'ERREUR POUR MESSAGE REÇU DANS UN SYSTÈME DE BUS SÉRIE

(30) Priorität: 22.12.2017 DE 102017223774
(43) Veröffentlichungstag der Anmeldung: 02.12.2020
(73) Patentinhaber: Robert Bosch GmbH, 70442 Stuttgart (DE)
(72) Erfinder: HARTWICH, Florian, 72762 Reutlingen (DE)
(86) Internationale Anmeldenummer: PCT/EP2018/085623
(87) Internationale Veröffentlichungsnummer: WO 2019/121763

(56) Entgegenhaltungen:
- EP-A1- 2 521 319
- "Road vehicles Controller area network (CAN) Part 1: Data link layer and physical signalling ; ISO+11898-1-2003", IEEE DRAFT; ISO+11898-1-2003, IEEE-SA, PISCATAWAY, NJ USA, Bd. msc.upamd, 18. November 2010 (2010-11-18), Seiten 1-52, XP017637056, [gefunden am 2010-11-18]
- "Road vehicles Controller area network (CAN) Part 2: High-speed medium access unit ; ISO+11898-2-2003", IEEE DRAFT; ISO+11898-2-2003, IEEE-SA, PISCATAWAY, NJ USA, Bd. msc.upamd, 18. November 2010 (2010-11-18), Seiten 1-26, XP017637057, [gefunden am 2010-11-18]

## Beschreibung

### Technisches Gebiet

Die vorliegende Erfindung betrifft eine Teilnehmerstation für ein serielles Bussystem und ein Verfahren zur Fehlersignalisierung für eine in einem seriellen Bussystem empfangene Nachricht.

### Stand der Technik

In Bussystemen wird zur Übertragung von Daten zwischen zwei Teilnehmerstationen des Busses ein Kommunikations-Protokoll verwendet. Das Protokoll legt fest, nach welchem Muster die Daten in zu übertragende Pakete oder Nachrichten zusammengefasst werden. Hierbei werden bei einem seriellen Bussystem verschiedene Nachrichten und somit auch die Daten, die in den Nachrichten in aufeinanderfolgenden Bits codiert sind, nacheinander über den Bus gesendet.

Zur Sicherung der korrekten Kommunikation in dem Bussystem, umfassen einige serielle Kommunikations-Protokolle eine Fehlerkennung, wie beispielsweise ein Parity-Bit, eine Prüfsumme bzw. eine CRC (= Cyclic Redundancy Check). Mit der Fehlerkennung ist es möglich, dass die Empfänger einer Nachricht dem Sender eine Rückmeldung geben, ob die Empfänger in der empfangenen Nachricht einen Fehler erkannt haben oder nicht. Damit kann dem Sender bestätigt werden, dass alle an die serielle Busleitung angeschlossenen Empfänger den gleichen Stand der Daten erhalten haben. Eine fehlerhafte Nachricht kann dann wiederholt werden. Die genannte Rückmeldung kann in einer Antwort-Nachricht gegeben werden oder auch direkt während oder am Ende der Nachrichten-Übertragung.

Hierfür sind je nach seriellem Bussystem verschiedene Fehlersignalisierungen eingeführt. Beispielsweise definiert der Standard ISO11898-1:2015 als CAN Protokoll-Spezifikation mit CAN FD spezielle Fehlerkennungen bzw. Error-Flags, mit denen eine derzeit gesendete Nachricht unterbrochen wird, wenn ein Fehler erkannt wird. Außerdem ist eine positive Rückmeldung am Ende der Nachricht definiert, die auch Acknowledge genannt wird, wenn diese Nachricht als fehlerfrei erkannt wird. Das Senden einer Fehlerkennung bzw. eines Error-Flags erfordert es, dass ein Empfänger das vom Sender getriebene Signal auf der Busleitung überschreiben kann, so dass alle Busteilnehmerstationen, einschließlich des Senders, dieses Error-Flag erkennen.

Das CAN-Protokoll definiert daher zwei Pegel für die Bit-Codierung der Nachrichten für die Übertragung auf dem CAN-Bus, nämlich rezessiv und dominant. Hierbei überschreibt der dominante Pegel den rezessiven Pegel. Das CAN Error-Flag besteht aus sechs dominanten Bits. Ein derartiges Muster tritt in einer fehlerfreien CAN Nachricht aufgrund der Bit-Stuffing-Methode nicht auf, bei welcher nach jeweils fünf aufeinanderfolgenden dominanten Bits ein rezessives Bit eingefügt wird. Daher wird eine Folge von sechs dominanten Bits nacheinander eindeutig als Fehlerkennung bzw. Error-Flag erkannt.

Problematisch ist, dass die Bits auf dem CAN-Bus asymmetrisch verformt werden, da die beiden Zustände des CAN-Busses unterschiedlich stark getrieben werden. Die dadurch stattfindende Flanken-Verschiebung der Bits lässt die rezessiven Bits kürzer als die benachbarten dominanten Bits erscheinen. Diese Asymmetrie limitiert die Bitrate für die serielle Übertragung, da die rezessiven Bits bei höheren Bitraten derart stark verkürzt würden, dass die rezessiven Bits nicht mehr sicher erkannt werden können. Zudem ist dadurch gegeben, dass auch eine Fehlerkennung bzw. Error-Flag nicht sicher erkennbar ist.

### Offenbarung der Erfindung

Daher ist es Aufgabe der vorliegenden Erfindung, eine Teilnehmerstation für ein serielles Bussystem und ein Verfahren zur Fehlersignalisierung für eine in einem seriellen Bussystem empfangene Nachricht bereitzustellen, welche die zuvor genannten Probleme lösen. Insbesondere sollen eine Teilnehmerstation für ein serielles Bussystem und ein Verfahren zur Fehlersignalisierung für eine in einem seriellen Bussystem empfangene Nachricht bereitgestellt werden, bei welchen sowohl eine Steigerung der Bitrate für die Übertragung von Nachrichten als auch eine sichere Fehlersignalisierung möglich ist. Verfahren zur Fehlersignalisierung in CAN-Bussystemen sind aus dem Standardisierungsdokument XP017637056 ("Road vehicles Controller area network (CAN) Part 1: Data link layer and physical signalling ; ISO+11898-1-2003") sowie der Patentanmeldung EP2521319A1 bekannt.

Die Aufgabe wird durch eine Teilnehmerstation für ein serielles Bussystem mit den Merkmalen des Anspruchs 1 gelöst. Die Teilnehmerstation umfasst eine Kommunikationssteuereinrichtung zum Erstellen einer Nachricht, die seriell an mindestens eine weitere Teilnehmerstation des Bussystems zu senden ist, und/oder Lesen einer Nachricht, die von mindestens einer weiteren Teilnehmerstation des Bussystems seriell empfangen wurde, und eine Sende-/Empfangseinrichtung zum Senden der erstellten Nachricht auf eine Busleitung an mindestens eine weitere Teilnehmerstation des Bussystems und/oder zum Empfangen einer Nachricht von der Busleitung, wobei die Kommunikationssteuereinrichtung und/oder die Sende-/Empfangseinrichtung ausgestaltet sind/ist, in der zu sendenden Nachricht ein ACK-Zeitfenster für ein ACK-Signal und/oder ein NACK-Zeitfenster für ein NACK-Signal für eine Signalisierung vorzusehen, ob mindestens eine weitere Teilnehmerstation in der gesendeten Nachricht einen Fehler erkannt hat oder nicht, und wobei die Sende-/Empfangseinrichtung ausgestaltet ist, in dem mindestens einen vorgesehenen Zeitfenster beim Senden an die mindestens eine weitere Teilnehmerstation keinen Pegel auf der Busleitung zu treiben, wie in Anspruch 1 beschrieben.

Mit der Teilnehmerstation ist es möglich, dass Empfänger einer Nachricht erkannte Fehler melden können, ohne asymmetrische Bus-Pegel in der Nachrichten-Übertragung zu verwenden. In Folge dessen können Bits in der Nachricht auf der Busleitung symmetrisch getrieben werden. Dies ermöglicht höhere Bitraten in dem seriellen Bussystem.

Die Teilnehmerstation ermöglicht zudem bei der seriellen Übertragung eine negative Acknowledge als Fehlersignalisierung.

Ein weiterer Vorteil ergibt sich dadurch, dass der Sender während der Nachrichten-Übertragung nicht den Bus-Pegel abtasten muss, um eine eventuelle Fehlerkennung bzw. Error-Flag zu erkennen. Dadurch wird der Aufwand für den Sender reduziert, was ebenfalls zu einer Steigerung der Bitraten in dem seriellen Bussystem beitragen kann.

Das von der Teilnehmerstation durchgeführte Verfahren kann nachträglich in ein serielles Kommunikationsprotokoll eingefügt werden, insbesondere in die CAN Protokoll-Spezifikation mit CAN FD gemäß dem zuvor genannten Standard. Beispielsweise ist das Einfügen auch als Option möglich, die wahlweise eingebaut wird.

Vorteilhafte weitere Ausgestaltungen der Teilnehmerstation sind in den abhängigen Ansprüchen angegeben.

Gemäß einem Ausführungsbeispiel sind/ist die Kommunikationssteuereinrichtung und/oder die Sende-/Empfangseinrichtung ausgestaltet, das ACK-Zeitfenster für das ACK-Signal und das NACK-Zeitfenster für das NACK-Signal durch eine vorbestimmte Zeitdauer zu beabstanden, in welcher von der Sende-/Empfangseinrichtung kein Pegel getrieben wird.

Denkbar ist, das ACK-Zeitfenster zeitlich vor oder zeitlich nach dem NACK-Zeitfenster in der Nachricht anzuordnen.

Möglicherweise haben das ACK-Zeitfenster und das NACK-Zeitfenster dieselbe oder eine unterschiedliche Zeitdauer.

Eine weitere Option besteht darin, dass das ACK-Signal ein Signal ist, welches für mindestens zwei der Teilnehmerstationen des Bussystems gleich ist und/oder das NACK-Signal ein Signal ist, welches für mindestens zwei der Teilnehmerstationen des Bussystems gleich ist.

Gemäß einem weiteren Ausführungsbeispiel weist das ACK-Signal und/oder das NACK-Signal ein Symbol auf, welches die Teilnehmerstation eindeutig identifiziert, welche das Signal gesendet hat. Hierbei ist es möglich das NACK-Signal nur auf die Busleitung zu senden, wenn die Teilnehmerstation in dem NACK-Zeitfenster einen exklusiven, kollisionsfreien Zugriff auf die Busleitung des Bussystems hat.

Möglicherweise ist die Teilnehmerstation für ein Bussystem ausgestaltet, bei welchem zumindest zeitweise ein exklusiver, kollisionsfreier Zugriff einer Teilnehmerstation auf eine Busleitung des Bussystems gewährleistet ist.

Die von der Teilnehmerstation erstellte oder empfangene Nachricht kann eine CAN-Nachricht oder eine CAN FD-Nachricht sein.

Als weitere Option ist die Kommunikationssteuereinrichtung ausgestaltet, für eine von der Busleitung empfangene Nachricht, die von der Teilnehmerstation gesendet wurde, das ACK-Zeitfenster für das ACK-Signal und/oder das NACK-Zeitfenster für das NACK-Signal auszuwerten, und wobei die Sende-/Empfangseinrichtung ausgestaltet ist, die zuvor gesendete Nachricht erneut zu senden, wenn das ACK-Signal und/oder das NACK-Signal signalisiert, dass ein Fehler erkannt wurde.

Als noch eine weitere Option ist die Kommunikationssteuereinrichtung ausgestaltet, eine von einer weiteren Teilnehmerstation des Bussystems empfangene Nachricht auf Fehler auszuwerten, wobei die Sende-/Empfangseinrichtung ausgestaltet ist, in dem ACK-Zeitfenster ein ACK-Signal zu treiben, wenn die Kommunikationssteuereinrichtung in der empfangenen Nachricht keinen Fehler erkannt hat oder in dem NACK-Zeitfenster ein NACK-Signal zu treiben, wenn die Kommunikationssteuereinrichtung in der empfangenen Nachricht einen Fehler erkannt hat.

Die zuvor beschriebene Teilnehmerstation kann Teil eines Bussystems sein, das zudem eine parallele Busleitung und mindestens zwei Teilnehmerstationen umfasst, welche über die Busleitung derart miteinander verbunden sind, dass sie miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Fehlersignalisierung für eine in einem seriellen Bussystem empfangene Nachricht nach Anspruch 13 gelöst. Das Verfahren hat die Schritte:
Erstellen, mit einer Teilnehmerstation des Bussystems, einer Nachricht, die seriell an mindestens eine weitere Teilnehmerstation des Bussystems zu senden ist, und Senden der erstellten Nachricht über eine Busleitung an mindestens eine weitere Teilnehmerstation des Bussystems, wobei in der gesendeten Nachricht ein ACK-Zeitfenster für ein ACK-Signal und/oder ein NACK-Zeitfenster für ein NACK-Signal für eine Signalisierung vorgesehen ist, ob mindestens eine weitere Teilnehmerstation in der gesendeten Nachricht einen Fehler erkannt hat oder nicht, wobei bei dem Schritt des Sendens der erstellten Nachricht in dem mindestens einen vorgesehenen Zeitfenster von der Teilnehmerstation kein Pegel auf der Busleitung getrieben wird, wie in Anspruch 13 beschrieben.

Die zuvor genannte Aufgabe wird zudem durch ein Verfahren zur Fehlersignalisierung für eine in einem seriellen Bussystem empfangene Nachricht nach Anspruch 14 gelöst. Das Verfahren hat die Schritte: Lesen, mit einer Teilnehmerstation des Bussystems, einer Nachricht, die seriell von mindestens einer weiteren Teilnehmerstation des Bussystems über eine Busleitung empfangen wurde und die ein ACK-Zeitfenster für ein ACK-Signal und/oder ein NACK-Zeitfenster für ein NACK-Signal für eine Signalisierung aufweist, ob die mindestens eine weitere Teilnehmerstation in der gesendeten Nachricht einen Fehler erkannt hat oder nicht, und Auswerten, mit der Teilnehmerstation, der gelesenen Nachricht auf Fehler, Treiben eines ACK-Signals in dem ACK-Zeitfenster, wenn in der empfangenen Nachricht kein Fehler erkannt wurde, und/oder Treiben eines NACK-Signals in dem NACK-Zeitfenster, wenn in der empfangenen Nachricht ein Fehler erkannt wurde, wie in Anspruch 14 beschrieben.

Die zuvor beschriebenen Verfahren bieten dieselben Vorteile, wie sie zuvor in Bezug auf die Teilnehmerstation genannt sind.

Bei den zuvor beschriebenen Verfahren wird im laufenden Betrieb des Bussystems abhängig von der Häufigkeit eines erkannten Fehlers zwischen zwei Betriebsarten von mehreren Betriebsarten umgeschaltet, die folgende Betriebsarten umfassen
eine Betriebsart A), bei welcher als das ACK-Signal ein Signal gesendet wird, welches für mindestens zwei der Teilnehmerstationen des Bussystems gleich ist und/oder als das NACK-Signal ein Signal gesendet wird, welches für mindestens zwei der Teilnehmerstationen des Bussystems gleich ist, eine Betriebsart B), bei welcher das ACK-Signal und/oder das NACK-Signal ein Symbol aufweist, welches die Teilnehmerstation eindeutig identifiziert, welche das Signal gesendet hat, und eine Betriebsart C), bei welcher das NACK-Signal nur auf die Busleitung gesendet wird, wenn die Teilnehmerstation in dem NACK-Zeitfenster einen exklusiven, kollisionsfreien Zugriff auf die Busleitung des Bussystems hat.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von Teilnehmerstationen des Bussystems gemäß dem ersten Ausführungsbeispiel gesendet werden können;
Fig. 3 eine Darstellung eines Beispiels für einen zeitlichen Verlauf einer Differenzspannung VDIFF der Bussignale CAN_H und CAN_L für einen Teil einer Nachricht bei einer Sende-/Empfangseinrichtung des Bussystems gemäß dem ersten Ausführungsbeispiel;
Fig. 4 eine Darstellung eines Beispiels für einen zeitlichen Verlauf einer Differenzspannung VDIFF der Bussignale CAN_H und CAN_L für einen Teil einer Nachricht bei einer Sende-/Empfangseinrichtung eines Bussystems gemäß einem zweiten Ausführungsbeispiel; und
Fig. 5 eine Darstellung eines Beispiels für einen zeitlichen Verlauf einer Differenzspannung VDIFF der Bussignale CAN_H und CAN_L für einen Teil einer Nachricht bei einer Sende-/Empfangseinrichtung eines Bussystems gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

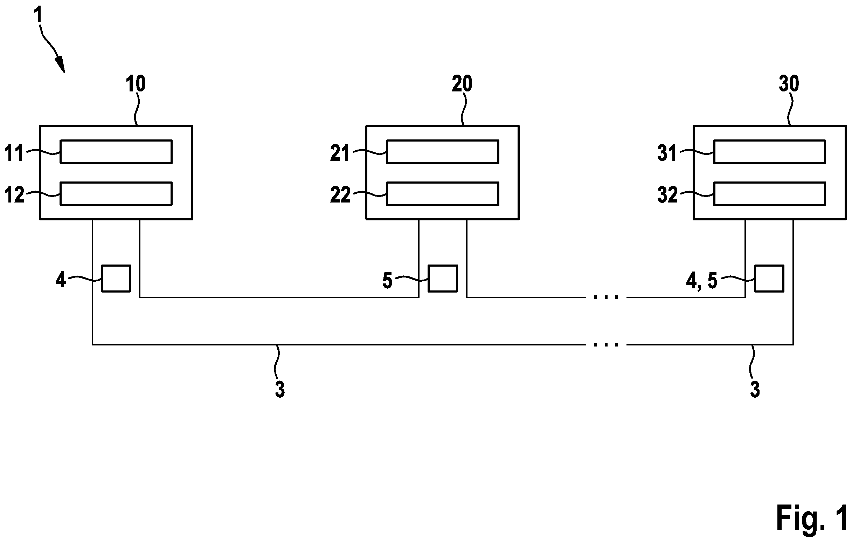

Fig. 1 zeigt als Beispiel ein serielles Bussystem 1, das als ein beliebiges serielles Bussystem ausgestaltet sein kann, in welchem eine Fehlersignalisierung für empfangene Nachrichten stattfindet. Insbesondere ist das Bussystem 1 ein CAN-Bussystem, CAN FD-Bussystem, FlexRay- Bussystem, Bussystem für Ethernet, Gigabit-Ethernet, usw.. Das Bussystem 1 ist in einem Fahrzeug, insbesondere einem Kraftfahrzeug, einem Flugzeug, usw., oder im Krankenhaus usw. verwendbar.

In Fig. 1 hat das Bussystem 1 eine, insbesondere als eine Zweidrahtleitung ausgeführte, parallele, Busleitung 3, an die eine Vielzahl von Teilnehmerstationen 10, 20, 30 angeschlossen sind. Über die Busleitung 3 sind Nachrichten 4, 5 in der Form von Signalen zwischen den einzelnen Teilnehmerstationen 10, 20, 30 seriell übertragbar. Die Teilnehmerstationen 10, 20, 30 sind beliebige Geräte, die miteinander Daten seriell austauschen sollen, wie beispielsweise Steuergeräte, Sensoren, Anzeigevorrichtungen, usw. eines Kraftfahrzeugs. Alternativ sind die Teilnehmerstationen 10, 20, 30 beispielsweise Computer eines Computernetzwerks oder Komponenten eines Automatisierungsnetzwerks, insbesondere für eine industrielle Anlage. Die Teilnehmerstationen 10, 20, 30 sind jedoch nicht auf die genannten speziellen Beispiele beschränkt.

Nachfolgend ist die Erfindung als Beispiel anhand des CAN- und CAN-FD-Bussystems beschrieben. Jedoch ist die Erfindung nicht darauf beschränkt, sondern die Erfindung kann auf ein beliebiges serielles Bussystem angewendet werden.

Wie in Fig. 1 gezeigt, hat die Teilnehmerstation 10 eine Kommunikationssteuereinrichtung 11 und eine Sende-/Empfangseinrichtung 12. Die Teilnehmerstation 20 hat dagegen eine Kommunikationssteuereinrichtung 21 und eine Sende-/Empfangseinrichtung 22. Die Teilnehmerstation 30 hat eine Kommunikationssteuereinrichtung 31 und eine Sende-/Empfangseinrichtung 32. Die Sende-/Empfangseinrichtungen 12, 22, 32 der Teilnehmerstationen 10, 20, 30 sind jeweils direkt an die Busleitung 3 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über die Busleitung 3 mit einer anderen Teilnehmerstation der Teilnehmerstationen 10, 20, 30, die an die Busleitung 3 angeschlossen sind.

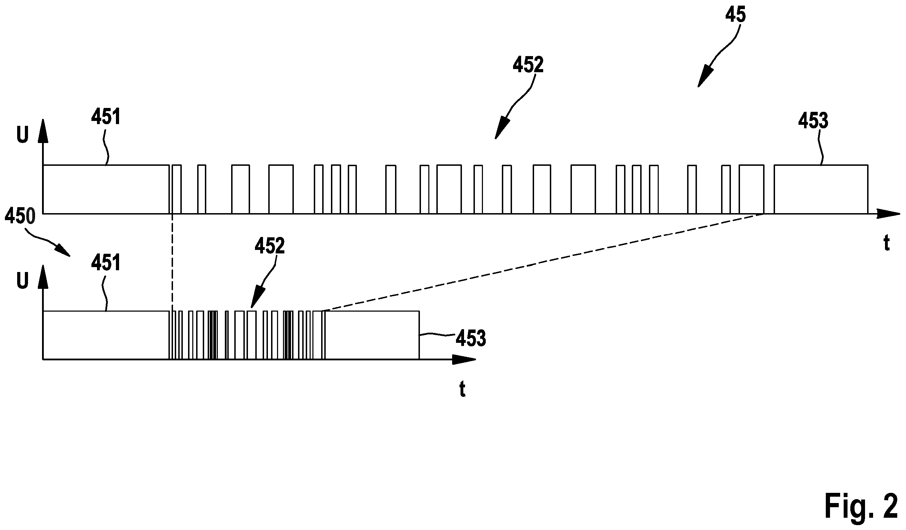

Die Kommunikationssteuereinrichtung 11 kann für das Beispiel des CAN-Bussystems bis auf die nachfolgend noch genauer beschriebenen Unterschiede wie ein herkömmlicher CAN-Controller ausgeführt sein. In diesem Fall erstellt und liest die Kommunikationssteuereinrichtung 11 erste Nachrichten 4, beispielsweise modifizierte Classic CAN-Nachrichten 4. Die Classic CAN-Nachrichten 4 sind bis auf die nachfolgend beschriebenen Modifikationen gemäß dem Classic Basisformat aufgebaut, bei welcher in der Nachricht 4 eine Anzahl von bis zu 8 Datenbytes umfasst sein können, wie im oberen Teil von Fig. 2 gezeigt.

Die Kommunikationssteuereinrichtung 21 in Fig. 1 kann für das Beispiel des CAN-Bussystems bis auf die nachfolgend noch genauer beschriebenen Unterschiede wie ein herkömmlicher CAN FD-Controller ausgeführt sein. In diesem Fall erstellt und liest die Kommunikationssteuereinrichtung 21 zweite Nachrichten 5, die beispielsweise modifizierte CAN FD-Nachrichten 5 sind. Hierbei sind die modifizierten CAN FD-Nachrichten 5 bis auf die nachfolgend beschriebenen Modifikationen auf der Grundlage eines CAN FD-Formats aufgebaut, bei welcher in der Nachricht 5 eine Anzahl von bis zu beispielsweise 64 Datenbytes umfasst sein können, wie im unteren Teil von Fig. 2 gezeigt.

Die Kommunikationssteuereinrichtung 31 kann für das Beispiel des CAN-Bussystems ausgeführt sein, um je nach Bedarf eine modifizierte Classic CAN-Nachricht 4 oder eine modifizierte CAN FD-Nachricht 5 für die Sende-/Empfangseinrichtung 32 bereitzustellen oder von dieser zu empfangen. Die Kommunikationssteuereinrichtung 21 erstellt und liest also eine erste Nachricht 4 oder zweite Nachricht 5, wobei sich die erste und zweite Nachricht 4, 5 durch ihren Datenübertragungsstandard unterscheiden, nämlich in diesem Fall modifiziertes CAN oder modifiziertes CAN FD.

Die Sende-/Empfangseinrichtung 12 kann somit bis auf die nachfolgend noch genauer beschriebenen Unterschiede wie ein herkömmlicher CAN Transceiver ausgeführt sein. Die Sende-/Empfangseinrichtung 22 kann bis auf die nachfolgend noch genauer beschriebenen Unterschiede wie ein herkömmlicher CAN FD-Transceiver ausgeführt sein. Die Sende-/Empfangseinrichtung 32 kann ausgeführt sein, um je nach Bedarf Nachrichten 4 gemäß dem modifizierten CAN-Basisformat oder Nachrichten 5 gemäß dem modifizierten CAN FD-Format für die Kommunikationssteuereinrichtung 31 bereitzustellen oder von dieser zu empfangen.

Mit den beiden Teilnehmerstationen 20, 30 ist eine Bildung und dann Übertragung von Nachrichten 5 mit dem modifizierten CAN FD oder auch mit höheren Datenraten als CAN FD realisierbar.

Fig. 2 zeigt in ihrem oberen Teil für die Nachricht 4 einen CAN-Rahmen 45, wie er von der Sende-/Empfangseinrichtung 12 oder der Sende-/Empfangseinrichtung 13 gesendet wird, und in ihrem unteren Teil für die Nachricht 5 einen CAN-FD-Rahmen 450, wie er von der Sende-/Empfangseinrichtung 22 oder 32 gesendet werden kann. Der CAN-Rahmen 45 und der CAN-FD-Rahmen 450 sind für die CAN-Kommunikation auf dem Bus 40 grundlegend in zwei unterschiedliche Phasen oder Bereiche unterteilt, nämlich die Arbitrationsphasen 451, 453 und einen Datenbereich 452, der bei Classical oder klassischem CAN auch Datenfeld bzw. bei CAN-FD auch Datenphase 452 genannt wird. In der Datenphase 452 sind die Nutzdaten des CAN-FD-Rahmens bzw. der Nachricht 5 enthalten.

Gemäß Fig. 2 wird bei CAN-FD im Vergleich zum klassischen CAN am Ende der Arbitrationsphase 451 die Bitrate für die folgende Datenphase 452 auf beispielsweise 2, 4, 8Mbps erhöht. Damit gilt, dass bei CAN-FD die Bitrate in den Arbitrationsphasen 451, 453 kleiner als die Bitrate in der Datenphase 452 ist. Bei CAN-FD ist die Datenphase 452 des CAN FD Rahmens 450 gegenüber der Datenphase 452 des CAN-Rahmens 45 zeitlich deutlich verkürzt.

Bei einem seriellen Bussystem ohne Arbitration 451, 453, wie beispielsweise Ethernet, FlexRay, usw., folgen zwei Datenphasen 452 direkt nacheinander.

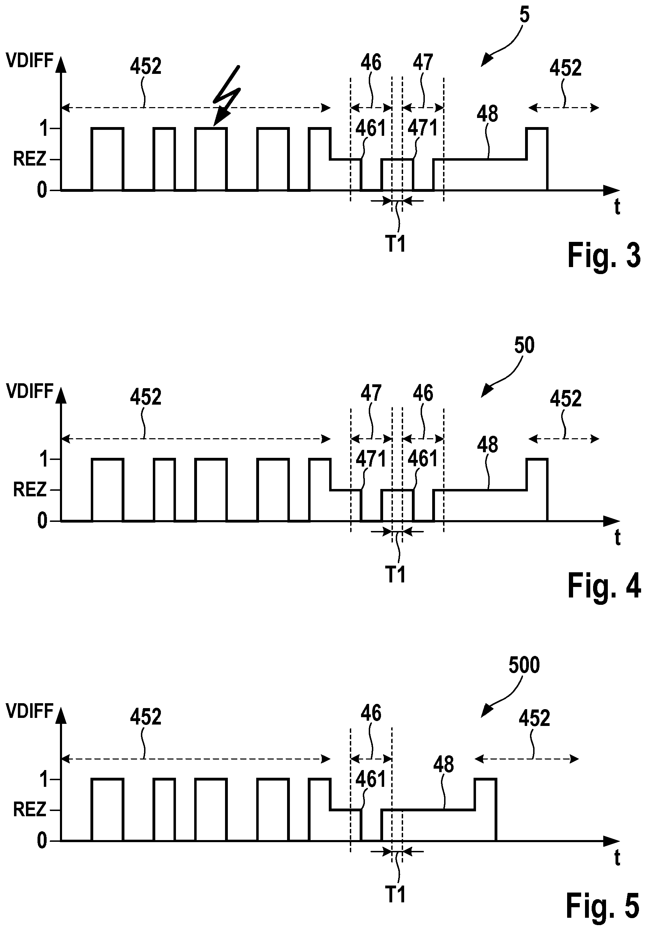

Fig. 3 veranschaulicht das Ende einer Datenphase 452 als Beispiel für eine Nachricht 5 anhand einer Differenzspannung VDIFF über der Zeit t. Für eine Nachricht 4 sind die nachfolgenden Ausführungen gleichermaßen gültig.

Die Nachricht 5 wird mit differentiellen symmetrischen Bus-Pegeln über eine Zweidraht-Busleitung als die Busleitung 3 erzeugt. Der rezessive Bus-Pegel, der in Fig. 3 als logische '1' bezeichnet ist, wird nicht von den BusTeilnehmerstationen 10, 20, 30 getrieben, sondern wird durch einen Abschluss-Widerstand der Busleitung 3 bestimmt. Der dominante Bus-Pegel ist in Fig. 3 als logische '0' dargestellt.

Gemäß Fig. 3 folgen nach der Datenphase 452 ein ACK-Zeitfenster 46 für ein ACK-Signal 461 und ein NACK-Zeitfenster 47 für ein NACK-Signal 471. Danach folgt eine Folge rezessiver Pegel REZ, welche das Ende der Übertragung eines Rahmens der Nachricht 5 anzeigt und in Fig. 3 mit dem Bezugszeichen 48 bezeichnet ist. Als Beispiel ist in Fig. 3 ein Fehler in der Datenphase 452, der in diesem Beispiel von mindestens einem, aber nicht von allen Empfängern gesehen wird, als schwarzer gezackter Blockpfeil dargestellt. Bei dem Beispiel in Fig.3 ist daher sowohl ein ACK-Signal 461 als auch ein NACK-Signal gesendet, nämlich das ACK-Signal 461 von den Empfängern, die keinen Fehler gesehen haben, das NACK-Signal 471 von denen, die einen Fehler gesehen haben.

In dem Zeitraum zwischen den beiden Datenphasen 452 in Fig. 3 treibt der Sender der Nachricht 5 den Bus bzw. den Spannungspegel auf der Busleitung 3 gar nicht. Wird der Bus in diesem Zeitraum auch von sonst keiner der Teilnehmerstationen 10, 20, 30 in de Bussystem 1 getrieben wird, stellt sich zwischen dem Ende der Datenphase 452 und dem Beginn des ACK-Zeitfensters 46 ein Pegel REZ auf der Busleitung 3 ein, der zwischen den Pegeln für die logische '1' und die logische '0' in Fig. 3 liegt, wie in Fig. 3 gezeigt.

Da das hier beschriebene Verfahren nicht an ein bestimmtes Nachrichten-Format für die serielle Übertragung gebunden ist, ist in Fig. 3 ein Fall dargestellt, dass zwei Datenphasen 452 nacheinander folgen. Anders als in Fig. 3 dargestellt, kann die nächste Nachricht 5 alternativ mit einer Arbitration beginnen, wie zuvor in Bezug auf das CAN-Protokoll beschrieben. Bei dem CAN-Protokoll ist einer der beiden getriebenen Bus-Pegel durch den rezessiven Pegel ersetzt und die Differenzspannung VDIFF ergibt sich für die differentiellen Signale CAN_H und CAN_L über der Zeit t. Am Beispiel des CAN-Protokolls wäre das ACK-Zeitfenster 46 der ACK-Slot bzw. das ACK-Feld nach dem CRC-Feld.

Unabhängig von dem gewählten seriellen Bussystem 1 gilt, dass das ACK-Zeitfenster 46 und das gesendete ACK-Signal 461 definierte Längen haben, wobei das gesendete ACK-Signal 461 nicht länger als das ACK-Zeitfenster 46 ist, wie in Fig. 3 wiedergegeben. Durch Überlagerung der ACK-Signale 461 mehrerer Teilnehmerstationen 10, 20, 30 kann das resultierende ACK-Signal 461 auf dem Bus verlängert sein. Die Längen von ACK-Zeitfenster 46 und ACK-Signal 461 als auch die erlaubten Toleranzen für das Erkennen eines gültigen ACK-Signals 461 durch den Sender werden passend zur Bitrate so gewählt, dass mögliche Phasen-Verschiebungen zwischen den Teilnehmerstation 10, 20, 30 das ACK-Signal 461 nicht verfälschen. Dadurch ist es für die Empfänger der Nachricht 5 nicht notwendig, das ACK-Signal 461 zu prüfen.

Zwischen dem ACK-Zeitfenster 46 und dem NACK-Zeitfenster 47 liegt eine Zeitdauer T1, in welcher der Bus von keiner der Teilnehmerstationen 10, 20, 30 getrieben wird. Dadurch stellt sich zwischen den Zeitfenstern 46, 47 der Pegel REZ auf der Busleitung 3 ein.

Auch das NACK-Zeitfenster 47 und das gesendete NACK-Signal 471 haben definierte Längen, wobei das gesendete NACK-Signal 471 nicht länger als das NACK-Zeitfenster 47 ist, wie in Fig. 3 wiedergegeben. Durch Überlagerung der NACK-Signale 471 mehrerer Teilnehmerstationen 10, 20, 30 kann das resultierende NACK-Signal 471 auf dem Bus verlängert sein. Die Längen von NACK-Zeitfenster 47 und NACK-Signal 471 als auch die erlaubten Toleranzen für das Erkennen eines gültigen NACK-Signals 471 durch den Sender werden passend zur Bitrate so gewählt, dass mögliche Phasen-Verschiebungen zwischen den Teilnehmerstation 10, 20, 30 das NACK-Signal 471 nicht verfälschen. Dadurch ist es für die Empfänger der Nachricht 5 nicht notwendig, das NACK-Signal 471 zu prüfen.

Wie zuvor erwähnt, treibt ein Sender der Nachricht 5, beispielsweise die Teilnehmerstation 20, während des ACK-Zeitfensters 46 den Bus bzw. die Spannung auf der Busleitung 3 gar nicht. Dieser Bus-Pegel, der nicht von einer der im Bus vorhandenen Busteilnehmerstation 10, 20, 30 getrieben wird, ist hier als rezessiv bezeichnet, weil er von einem der getriebenen Bus-Pegel überschrieben werden kann. Dasselbe gilt für das NACK-Zeitfenster 47.

Die Empfänger, die eine fehlerfreie Nachricht 5 der Teilnehmerstation 20 als Sender der Nachricht 5 gesehen haben, also in diesem Fall beispielsweise die Teilnehmerstation 30, treiben im ACK-Zeitfenster 46 einen festgelegten Bus-Pegel, beispielsweise eine '0', als ACK-Signal 461, wie in Fig. 3 gezeigt. Die Empfänger, die einen Fehler in der Nachricht 5 erkannt haben, also in diesem Fall beispielsweise die Teilnehmerstation 10, treiben den Bus bzw. den Pegel auf der Busleitung 3 im ACK-Zeitfenster 46 gar nicht.

Die Empfänger, die in der Nachricht 5 einen Fehler gesehen haben, treiben im NACK-Zeitfenster 47 einen festgelegten Bus-Pegel, z.B. eine '0', als NACK-Signal 471, wie in Fig. 3 gezeigt. Die Empfänger, die keinen Fehler in der Nachricht 5 erkannt haben, treiben den Bus bzw. den Pegel auf der Busleitung 3 im NACK-Zeitfenster 47 gar nicht.

Sieht der Sender der Nachricht ein ACK-Signal 461 und kein NACK-Signal 471, ist die Nachricht 5 erfolgreich an alle aktiven Busteilnehmer der Teilnehmerstationen 10, 20, 30 übermittelt.

Sieht der Sender ein NACK-Signal 471 und kein ACK-Signal 461, hat keiner der aktiven Busteilnehmer die Nachricht 5 erhalten.

Sieht bzw. empfängt der Sender beide Signale 461, 471, hat mindestens einer der aktiven Busteilnehmer die Nachricht 5 empfangen, aber aufgrund von lokalen Fehlern hat mindestens ein anderer der aktiven Busteilnehmer diese Nachricht 5 verworfen.

Sieht der Sender weder ein ACK-Signal 461 noch ein NACK-Signal 471, ist er die einzige aktive Teilnehmerstation 10, 20, 30 im Bussystem 1.

Gemäß einer weiteren Betriebsart des ersten Ausführungsbeispiels wird das NACK-Zeitfenster 47 verwendet, um die Teilnehmerstation 10, 20, 30 zu identifizieren, die einen Fehler in der Nachricht 5 gesehen hat. Dazu wird jeder Teilnehmerstation 10, 20, 30 des Bussystems 1 ein eindeutig zu identifizierendes NACK-Symbol zugeteilt. Bei bis zu 31 Teilnehmerstationen 10, 20, 30 im Bussystem 1 kann als NACK-Symbol zum Beispiel eine fünfstellige Bitfolge vergeben werden. Die Bits der Bitfolge können ähnlich wie bei der CAN Arbitration codiert sein, insbesondere die logische '1' als rezessiver Bus-Pegel und die logische '0' als getriebener Bus-Pegel. Um die Fehlermeldungen einzelner Teilnehmerstationen 10, 20, 30 erkennen zu können, kann das Verfahren mehrstufig angewendet werden, wie nachfolgend in Bezug auf die Betriebsart C) beschrieben.

In diesem ersten Ausführungsbeispiel ist es möglich, das Verfahren im laufenden Betrieb zwischen mindestens zwei der nachfolgend genannten Betriebsarten umzuschalten. Das heißt, optional sind in den Teilnehmerstation 10, 20, 30 des Bussystems 1 mindestens zwei der nachfolgend genannten Betriebsarten implementiert.

Betriebsart A): Alle NACK-Sender senden nur ein einfaches NACK-Signal 471, das keine Identifikationsmöglichkeit der einzelnen NACK-Sender ermöglicht.

Betriebsart B): Die NACK-Sender senden ihre identifizierbaren NACK-Symbole. Falls mehr als eine Teilnehmerstation 10, 20, 30 ein NACK-Symbol sendet, überlagern die NACK-Symbole der Teilnehmerstationen 10, 20, 30 und sind nicht mehr eindeutig identifizierbar. Der Sender der Nachricht 5 erkennt nur, dass mindestens eine Teilnehmerstation 10, 20, 30 des Bussystems 1 einen Fehler gesehen hat, wie bei der Betriebsart A). Die Betriebsart B) kann jedoch zur Analyse von sporadischen Einzelfehlern verwendet werden, wenn in der Regel nur eine Teilnehmerstation 10, 20, 30 des Bussystems 1 einen Fehler in der Nachricht 5 sieht.

Betriebsart C): Die NACK-Symbol-Sender arbitrieren untereinander nach den Regeln der CAN-Arbitration. Die Verlierer der Arbitration beenden ihr NACK-Symbol in diesem NACK-Zeitfenster 47. Nach dem ersten NACK-Zeitfenster 47, in dem ein NACK-Symbol gesendet wurde, wird ein zweites NACK-Zeitfenster 47 gestartet. Hier starten die Verlierer der Arbitration des ersten NACK-Zeitfensters 47 ihre NACK-Symbole erneut. Dies wird wiederholt, bis eine festgelegte Obergrenze von NACK- Zeitfenstern 47 erreicht ist, oder bis ein NACK-Zeitfenster 47 leer geblieben ist. Pro NACK- Zeitfenster 47 wird so eine Teilnehmerstation 10, 20, 30 des Bussystems 1 identifiziert, die in der Nachricht 5 einen Fehler gesehen hat.

Die Betriebsart C) ist vor allem für eine Fehlersuche und/oder Fehleranalyse hilfreich, wenn nach der Ursache für sporadische Fehler gesucht werden soll. In diesem Fall kann ein NACK-Symbol verwendet werden, um auch in einem CAN-Netzwerk einfach die Teilnehmerstation 10, 20, 30 zu ermitteln, die eine Fehlerkennung (Error-Flag) gesendet hat. Die festgelegte Obergrenze von NACK- Zeitfenstern 47 ergibt sich daraus, dass in einem NACK- Zeitfenster 47 nur ein NACK-Symbol decodiert wird und daher immer dann, wenn ein NACK-Symbol gesehen wurde, ein weiteres NACK- Zeitfenster 47 angehängt wird. Dies beansprucht viel Bus-Bandbreite, so dass die Obergrenze festlegt, wie viel Bus-Bandbreite für die Fehlersuche bereitgestellt werden kann.

Je nach Anforderungen des Bussystems 1 kann zwischen mindestens zwei der drei Betriebsarten A), B), C) gewechselt werden. Der Wechsel zwischen den Betriebsarten A) oder B) oder C) wird durch einen Algorithmus gesteuert und findet abhängig von der FehlerHäufigkeit statt.

Bei allen Verfahren wird das Ende der Übertragung durch einen genügend langen rezessiv-Pegel als die Folge 48 erkannt, die beispielsweise bei CAN "End of Frame" genannt ist. Der Schwellwert für die End-of-Frame-Länge bzw. Länge der Folge 48 hängt ab von der Bitrate und von den Längen der ACK- und NACK-Zeitfenster 46, 47.

Bei dem hier beschriebenen Beispiel wird der nicht getriebene rezessive Bus-Pegel mit dem getriebenen Pegel für die logische '0' überschrieben. Stattdessen kann gemäß einer Modifikation der getriebene Pegel für die logische '1' verwendet werden.

Gemäß einer weiteren Modifikation ist es möglich, für ACK-Signale 461 sowie das zugehörige ACK-Symbol einen anderen Bus-Pegel zu verwenden als für NACK-Signale 471 sowie das zugehörige NACK-Symbol.

Gemäß einer weiteren Modifikation der zuvor beschriebenen Ausführungsbeispiele ist es möglich, das bei der Betriebsart C) beschriebene Verfahren für identifizierbare NACK-Symbole zusätzlich oder alternativ für identifizierbare ACK-Symbole zu verwenden.

Gemäß noch einer weiteren Modifikation der zuvor beschriebenen Ausführungsbeispiele ist es möglich, das Senden von ACK-Symbolen auf die Teilnehmerstationen des Bussystems 1 zu beschränken, für welche die aktuelle Nachricht 5, 50, 500 bestimmt ist.

Gemäß noch einer weiteren Modifikation der zuvor beschriebenen Ausführungsbeispiele ist es möglich, auf NACK-Symbole zu verzichten, wenn identifizierbare ACK-Symbole verwendet werden.

Fig. 4 zeigt in Bezug auf ein zweites Ausführungsbeispiel den Bereich am Ende der Datenphase 452 für eine Nachricht 50. Auch hier ist wieder die Differenzspannung VDIFF über der Zeit t mit differentiellen symmetrischen Bus-Pegeln über eine Zweidraht-Busleitung als die Busleitung 3 gezeigt, wie bereits in Bezug auf Fig. 3 zuvor beschrieben.

Im Unterschied zu Fig. 3 kommt bei dem zweiten Ausführungsbeispiel gemäß Fig. 4 das NACK-Zeitfenster 47 vor dem ACK-Zeitfenster 46.

Ansonsten gilt das Gleiche, wie zuvor im Zusammenhang mit Fig. 3 beschrieben.

Fig. 5 zeigt in Bezug auf ein drittes Ausführungsbeispiel den Bereich am Ende der Datenphase 452 für eine Nachricht 500. Auch hier ist wieder die Differenzspannung VDIFF über der Zeit t mit differentiellen symmetrischen Bus-Pegeln über eine Zweidraht-Busleitung als die Busleitung 3 gezeigt, wie bereits in Bezug auf Fig. 3 zuvor beschrieben.

Im Unterschied zu Fig. 3 und Fig. 4 ist bei dem dritten Ausführungsbeispiel nur eines der Zeitfenster 46, 47 vorhanden. Dies ist in Fig. 5 als Beispiel gezeigt, wobei nur das ACK-Zeitfenster 46 vorhanden ist. Alternativ ist es jedoch möglich, dass nur das NACK-Zeitfenster 47 vorhanden ist.

Ansonsten gilt das Gleiche, wie zuvor im Zusammenhang mit Fig. 3 beschrieben.

Insgesamt kann mit den zuvor beschriebenen Ausführungsbeispielen mit allen deren Ausführungsvarianten oder Modifikationen eine verbesserte Fehlersignalisierung für empfangene Nachrichten 5, 50, 500 für den Sender in dem Bussystem 1 erzielt werden.

Alle zuvor beschriebenen Ausgestaltungen des Bussystems 1, der Teilnehmerstationen 10, 20, 30 und des von diesen ausgeführten Verfahrens können einzeln oder in allen möglichen Kombinationen Verwendung finden. Insbesondere können alle Merkmale der zuvor beschriebenen Ausführungsbeispiele und/oder deren Ausführungsvarianten und/oder deren Modifikationen beliebig kombiniert werden. Zusätzlich oder alternativ sind insbesondere folgende Modifikationen denkbar.

Das zuvor beschriebene Bussystem 1 gemäß den Ausführungsbeispielen ist anhand eines auf dem CAN-Protokoll basierenden Bussystems beschrieben. Das Bussystem 1 gemäß den Ausführungsbeispielen kann jedoch auch eine andere Art von seriellem Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 10 in dem Bussystem 1 entfallen. Es ist möglich, dass eine oder mehrere der Teilnehmerstationen 10 oder 20 oder 30 in dem Bussystem 1 vorhanden sind.

## Patentansprüche

1. Teilnehmerstation (10; 20; 30) für ein serielles Bussystem (1), mit
einer Kommunikationssteuereinrichtung (11; 21; 31) zum Erstellen einer Nachricht (4; 5; 50; 500), die seriell an mindestens eine weitere Teilnehmerstation (20; 30; 10) des Bussystems (1) zu senden ist, und/oder Lesen einer Nachricht (4; 5; 50; 500), die von mindestens einer weiteren Teilnehmerstation (20; 30; 10) des Bussystems (1) seriell empfangen wurde, und
einer Sende-/Empfangseinrichtung (12; 22; 32) zum Senden der erstellten Nachricht (4; 5; 50; 500) auf eine Busleitung (3) an mindestens eine weitere Teilnehmerstation (20; 30; 10) des Bussystems (1) und/oder zum Empfangen einer Nachricht (4; 5; 50; 500) von der Busleitung (3),
wobei die Kommunikationssteuereinrichtung (11; 21; 31) und/oder die Sende-/Empfangseinrichtung (12; 22; 32) ausgestaltet sind/ist, in der zu sendenden Nachricht (4; 5; 50; 500) ein ACK-Zeitfenster (46) für ein ACK-Signal (461) und/oder ein NACK-Zeitfenster (47) für ein NACK-Signal (471) für eine Signalisierung vorzusehen, ob mindestens eine weitere Teilnehmerstation (20; 30; 10) in der gesendeten Nachricht (4; 5; 50; 500) einen Fehler erkannt hat oder nicht, und
wobei die Sende-/Empfangseinrichtung (12; 22; 32) ausgestaltet ist, in dem mindestens einen vorgesehenen Zeitfenster (46, 47) beim Senden an die mindestens eine weitere Teilnehmerstation (20; 30; 10) keinen Pegel auf der Busleitung (3) zu treiben, und
**dadurch gekennzeichnet, dass** die Teilnehmerstation (10; 20; 30) ausgestaltet ist, im laufenden Betrieb des Bussystems (1) abhängig von der Häufigkeit eines erkannten Fehlers zwischen zwei Betriebsarten von mehreren Betriebsarten umzuschalten, die folgende Betriebsarten umfassen:
eine Betriebsart A), bei welcher als das ACK-Signal (461) ein Signal gesendet wird, welches für mindestens zwei der Teilnehmerstationen (10; 20; 30) des Bussystems (1) gleich ist und/oder als das NACK-Signal (471) ein Signal gesendet wird, welches für mindestens zwei der Teilnehmerstationen (10; 20; 30) des Bussystems (1) gleich ist,
eine Betriebsart B), bei welcher das ACK-Signal (461) und/oder das NACK-Signal (471) ein Symbol aufweist, welches die Teilnehmerstation (10; 20; 30) eindeutig identifiziert, welche das Signal (461; 471) gesendet hat, und
eine Betriebsart C), bei welcher das NACK-Signal (471) nur auf die Busleitung (3) gesendet wird, wenn die Teilnehmerstation (10; 20; 30) in dem NACK-Zeitfenster (47) einen exklusiven, kollisionsfreien Zugriff auf die Busleitung (3) des Bussystems (1) hat.

2. Teilnehmerstation (10; 20; 30) nach Anspruch 1, wobei die Kommunikationssteuereinrichtung (11; 21; 31) und/oder die Sende-/Empfangseinrichtung (12; 22; 32) ausgestaltet sind/ist, das ACK-Zeitfenster (46) für das ACK-Signal (461) und das NACK-Zeitfenster (47) für das NACK-Signal (471) durch eine vorbestimmte Zeitdauer (T1) zu beabstanden, in welcher von der Sende-/Empfangseinrichtung (12; 22; 32) kein Pegel getrieben wird.

3. Teilnehmerstation (10; 20; 30) nach Anspruch 1 oder 2, wobei das ACK-Zeitfenster (46) zeitlich vor oder zeitlich nach dem NACK-Zeitfenster (47) in der Nachricht (4; 5; 50; 500) angeordnet ist.

4. Teilnehmerstation (10; 20; 30) nach einem der vorangehenden Ansprüche, wobei das ACK-Zeitfenster (46) und das NACK-Zeitfenster (47) dieselbe oder eine unterschiedliche Zeitdauer haben.

5. Teilnehmerstation (10; 20; 30) nach einem der vorangehenden Ansprüche, wobei das ACK-Signal (461) ein Signal ist, welches für mindestens zwei der Teilnehmerstationen (10; 20; 30) des Bussystems (1) gleich ist und/oder das NACK-Signal (471) ein Signal ist, welches für mindestens zwei der Teilnehmerstationen (10; 20; 30) des Bussystems (1) gleich ist.

6. Teilnehmerstation (10; 20; 30) nach einem der vorangehenden Ansprüche 1 bis 5, wobei das ACK-Signal (461) und/oder das NACK-Signal (471) ein Symbol aufweisen/aufweist, welches die Teilnehmerstation (10; 20; 30) eindeutig identifiziert, welche das Signal (461; 471) gesendet hat.

7. Teilnehmerstation (10; 20; 30) nach Anspruch 6, wobei die Teilnehmerstation (10; 20; 30) ausgestaltet ist, das NACK-Signal (471) nur auf die Busleitung (3) zu senden, wenn die Teilnehmerstation (10; 20; 30) in dem NACK-Zeitfenster (47) einen exklusiven, kollisionsfreien Zugriff auf die Busleitung (3) des Bussystems (1) hat.

8. Teilnehmerstation (10; 20; 30) nach einem der vorangehenden Ansprüche, wobei die Teilnehmerstation (10; 20; 30) für ein Bussystem (1) ausgestaltet ist, bei welchem zumindest zeitweise ein exklusiver, kollisionsfreier Zugriff einer Teilnehmerstation (10, 20, 30) auf eine Busleitung (3) des Bussystems (1) gewährleistet ist.

9. Teilnehmerstation (10; 20; 30) nach einem der vorangehenden Ansprüche, wobei die Nachricht (4; 5; 50; 500) eine CAN-Nachricht (4) oder eine CAN FD-Nachricht (5; 50; 500) ist.

10. Teilnehmerstation (10; 20; 30) nach einem der vorangehenden Ansprüche,
wobei die Kommunikationssteuereinrichtung (11; 21; 31) ausgestaltet ist, für eine von einer Busleitung (3) empfangene Nachricht (4; 5; 50; 500), die von der Teilnehmerstation (10; 20; 30) gesendet wurde, das ACK-Zeitfenster (46) für das ACK-Signal (461) und/oder das NACK-Zeitfenster (47) für das NACK-Signal (471) auszuwerten, und
wobei die Sende-/Empfangseinrichtung (12; 22; 32) ausgestaltet ist, die zuvor gesendete Nachricht (4; 5; 50; 500) erneut zu senden, wenn das ACK-Signal (461) und/oder das NACK-Signal (471) signalisiert, dass ein Fehler erkannt wurde.

11. Teilnehmerstation (10; 20; 30) nach einem der vorangehenden Ansprüche,
wobei die Kommunikationssteuereinrichtung (11; 21; 31) ausgestaltet ist, eine von einer weiteren Teilnehmerstation (20; 30; 10) des Bussystems (1) empfangene Nachricht (4; 5; 50; 500) auf Fehler auszuwerten, und
wobei die Sende-/Empfangseinrichtung (12; 22; 32) ausgestaltet in dem ACK-Zeitfenster (46) ein ACK-Signal (461) zu treiben, wenn die Kommunikationssteuereinrichtung (11; 21; 31) in der empfangenen Nachricht (4; 5; 50; 500) keinen Fehler erkannt hat oder in dem NACK-Zeitfenster (47) ein NACK-Signal (471) zu treiben, wenn die Kommunikationssteuereinrichtung (11; 21; 31) in der empfangenen Nachricht (4; 5; 50; 500) einen Fehler erkannt hat.

12. Bussystem (1), mit
einer parallelen Busleitung (3), und
mindestens zwei Teilnehmerstationen (10; 20; 30), welche über die Busleitung (3) derart miteinander verbunden sind, dass sie miteinander kommunizieren können,
wobei mindestens eine der mindestens zwei Teilnehmerstationen (10; 20; 30) eine Teilnehmerstation (20; 30) nach einem der vorangehenden Ansprüche ist.

13. Verfahren zur Fehlersignalisierung für eine in einem seriellen Bussystem (1) empfangene Nachricht (4; 5; 50; 500), wobei das Verfahren die Schritte aufweist:
Erstellen, mit einer Teilnehmerstation (10; 20; 30) des Bussystems (1), einer Nachricht (4; 5; 50; 500), die seriell an mindestens eine weitere Teilnehmerstation (20; 30; 10) des Bussystems (1) zu senden ist, und
Senden der erstellten Nachricht (4; 5; 50; 500) über eine Busleitung (3) an mindestens eine weitere Teilnehmerstation (20; 30; 10) des Bussystems (1),
wobei in der gesendeten Nachricht (4; 5; 50; 500) ein ACK-Zeitfenster (46) für ein ACK-Signal (461) und/oder ein NACK-Zeitfenster (47) für ein NACK-Signal (471) für eine Signalisierung vorgesehen ist, ob mindestens eine weitere Teilnehmerstation (20; 30; 10) in der gesendeten Nachricht (4; 5; 50; 500) einen Fehler erkannt hat oder nicht,
wobei bei dem Schritt des Sendens der erstellten Nachricht (4; 5; 50; 500) in dem mindestens einen vorgesehenen Zeitfenster (46, 47) von der Teilnehmerstation (10; 20; 30) kein Pegel auf der Busleitung (3) getrieben wird, und
wobei das Verfahren **dadurch gekennzeichnet ist, dass** im laufenden Betrieb des Bussystems (1) abhängig von der Häufigkeit eines erkannten Fehlers zwischen zwei Betriebsarten von mehreren Betriebsarten umgeschaltet wird, die folgende Betriebsarten umfassen:
eine Betriebsart A), bei welcher als das ACK-Signal (461) ein Signal gesendet wird, welches für mindestens zwei der Teilnehmerstationen (10; 20; 30) des Bussystems (1) gleich ist und/oder als das NACK-Signal (471) ein Signal gesendet wird, welches für mindestens zwei der Teilnehmerstationen (10; 20; 30) des Bussystems (1) gleich ist,
eine Betriebsart B), bei welcher das ACK-Signal (461) und/oder das NACK-Signal (471) ein Symbol aufweist, welches die Teilnehmerstation (10; 20; 30) eindeutig identifiziert, welche das Signal (461; 471) gesendet hat, und
eine Betriebsart C), bei welcher das NACK-Signal (471) nur auf die Busleitung (3) gesendet wird, wenn die Teilnehmerstation (10; 20; 30) in dem NACK-Zeitfenster (47) einen exklusiven, kollisionsfreien Zugriff auf die Busleitung (3) des Bussystems (1) hat.

14. Verfahren zur Fehlersignalisierung für eine in einem seriellen Bussystem (1) empfangene Nachricht (4; 5; 50; 500), wobei das Verfahren die Schritte aufweist:
Lesen, mit einer Teilnehmerstation (10; 20; 30) des Bussystems (1), einer Nachricht (4; 5; 50; 500), die seriell von mindestens einer weiteren Teilnehmerstation (20; 30; 10) des Bussystems (1) über eine Busleitung (3) empfangen wurde und die ein ACK-Zeitfenster (46) für ein ACK-Signal (461) und/oder ein NACK-Zeitfenster (47) für ein NACK-Signal (471) für eine Signalisierung aufweist, ob die mindestens eine weitere Teilnehmerstation (20; 30; 10) in der gesendeten Nachricht (4; 5; 50; 500) einen Fehler erkannt hat oder nicht, und
Auswerten, mit der Teilnehmerstation (10; 20; 30), der gelesenen Nachricht (4; 5; 50; 500) auf Fehler,
Treiben eines ACK-Signals (461) in dem ACK-Zeitfenster (46), wenn in der empfangenen Nachricht (4; 5; 50; 500) kein Fehler erkannt wurde, und/oder
Treiben eines NACK-Signals (471) in dem NACK-Zeitfenster (47), wenn in der empfangenen Nachricht (4; 5; 50; 500) ein Fehler erkannt wurde,
wobei das Verfahren **dadurch gekennzeichnet ist, dass** im laufenden Betrieb des Bussystems (1) abhängig von der Häufigkeit eines erkannten Fehlers zwischen zwei Betriebsarten von mehreren Betriebsarten umgeschaltet wird, die folgende Betriebsarten umfassen
eine Betriebsart A), bei welcher als das ACK-Signal (461) ein Signal gesendet wird, welches für mindestens zwei der Teilnehmerstationen (10; 20; 30) des Bussystems (1) gleich ist und/oder als das NACK-Signal (471) ein Signal gesendet wird, welches für mindestens zwei der Teilnehmerstationen (10; 20; 30) des Bussystems (1) gleich ist,
eine Betriebsart B), bei welcher das ACK-Signal (461) und/oder das NACK-Signal (471) ein Symbol aufweist, welches die Teilnehmerstation (10; 20; 30) eindeutig identifiziert, welche das Signal (461; 471) gesendet hat, und
eine Betriebsart C), bei welcher das NACK-Signal (471) nur auf die Busleitung (3) gesendet wird, wenn die Teilnehmerstation (10; 20; 30) in dem NACK-Zeitfenster (47) einen exklusiven, kollisionsfreien Zugriff auf die Busleitung (3) des Bussystems (1) hat.

## Claims

1. Subscriber station (10; 20; 30) for a serial bus system (1), having
a communication control device (11; 21; 31) for creating a message (4; 5; 50; 500) which is to be transmitted serially to at least one further subscriber station (20; 30; 10) of the bus system (1), and/or reading a message (4; 5; 50; 500) which has been serially received from at least one further subscriber station (20; 30; 10) of the bus system (1), and
a transmission/reception device (12; 22; 32) for transmitting the created message (4; 5; 50; 500) to at least one further subscriber station (20; 30; 10) of the bus system (1) on a bus line (3) and/or for receiving a message (4; 5; 50; 500) from the bus line (3),
wherein the communication control device (11; 21; 31) and/or the transmission/reception device (12; 22; 32) are/is configured to provide in the message (4; 5; 50; 500) which is to be transmitted an ACK time window (46) for an ACK signal (461) and/or a NACK time window (47) for a NACK signal (471) for signalling whether at least one further subscriber station (20; 30; 10) has or has not detected an error in the transmitted message (4; 5; 50; 500), and
wherein the transmission/reception device (12; 22; 32) is configured to apply no level to the bus line (3) in the at least one provided time window (46, 47) during transmission to the at least one further subscriber station (20; 30; 10), and
**characterized in that**
the subscriber station (10; 20; 30) is configured to switch between two operating modes of a plurality of operating modes during operation of the bus system (1) depending on the frequentness of a detected error, said operating modes comprising the following operating modes: an operating mode A) in which a signal which is identical for at least two of the subscriber stations (10; 20; 30) of the bus system (1) is transmitted as the ACK signal (461) and/or a signal which is identical for at least two of the subscriber stations (10; 20; 30) of the bus system (1) is transmitted as the NACK signal (471),
an operating mode B) in which the ACK signal (461) and/or the NACK signal (471) has a symbol which uniquely identifies the subscriber station (10; 20; 30) which has transmitted the signal (461; 471), and
an operating mode C) in which the NACK signal (471) is transmitted to the bus line (3) only when the subscriber station (10; 20; 30) has exclusive, collision-free access to the bus line (3) of the bus system (1) in the NACK time window (47).

2. Subscriber station (10; 20; 30) according to Claim 1, wherein the communication control device (11; 21; 31) and/or the transmission/reception device (12; 22; 32) are/is configured to space apart the ACK time window (46) for the ACK signal (461) and the NACK time window (47) for the NACK signal (471) by a predetermined duration (T1) in which no level is applied by the transmission/reception device (12; 22; 32).

3. Subscriber station (10; 20; 30) according to Claim 1 or 2, wherein the ACK time window (46) is arranged temporally before or temporally after the NACK time window (47) in the message (4; 5; 50; 500).

4. Subscriber station (10; 20; 30) according to one of the preceding claims, wherein the ACK time window (46) and the NACK time window (47) have the same or a different duration.

5. Subscriber station (10; 20; 30) according to one of the preceding claims, wherein the ACK signal (461) is a signal which is identical for at least two of the subscriber stations (10; 20; 30) of the bus system (1) and/or the NACK signal (471) is a signal which is identical for at least two of the subscriber stations (10; 20; 30) of the bus system (1).

6. Subscriber station (10; 20; 30) according to one of preceding Claims 1 to 5, wherein the ACK signal (461) and/or the NACK signal (471) have/has a symbol which uniquely identifies the subscriber station (10; 20; 30) which has transmitted the signal (461; 471).

7. Subscriber station (10; 20; 30) according to Claim 6, wherein the subscriber station (10; 20; 30) is configured to transmit the NACK signal (471) to the bus line (3) only when the subscriber station (10; 20; 30) has exclusive, collision-free access to the bus line (3) of the bus system (1) in the NACK time window (47).

8. Subscriber station (10; 20; 30) according to one of the preceding claims, wherein the subscriber station (10; 20; 30) is configured for a bus system (1) in which exclusive, collision-free access by a subscriber station (10, 20, 30) to a bus line (3) of the bus system (1) is ensured at least temporarily.

9. Subscriber station (10; 20; 30) according to one of the preceding claims, wherein the message (4; 5; 50; 500) is a CAN message (4) or a CAN FD message (5; 50; 500).

10. Subscriber station (10; 20; 30) according to one of the preceding claims,
wherein the communication control device (11; 21; 31) is configured to evaluate the ACK time window (46) for the ACK signal (461) and/or the NACK time window (47) for the NACK signal (471) for a message (4; 5; 50; 500), received from a bus line (3), which has been transmitted by the subscriber station (10; 20; 30), and
wherein the transmission/reception device (12; 22; 32) is configured to re-transmit the previously transmitted message (4; 5; 50; 500) when the ACK signal (461) and/or the NACK signal (471) signals that an error has been detected.

11. Subscriber station (10; 20; 30) according to one of the preceding claims,
wherein the communication control device (11; 21; 31) is configured to evaluate a message (4; 5; 50; 500) received from a further subscriber station (20; 30; 10) of the bus system (1) for errors, and
wherein the transmission/reception device (12; 22; 32) is configured to apply an ACK signal (461) in the ACK time window (46) when the communication control device (11; 21; 31) has detected no errors in the received message (4; 5; 50; 500) or to apply a NACK signal (471) in the NACK time window (47) when the communication control device (11; 21; 31) has detected an error in the received message (4; 5; 50; 500).

12. Bus system (1), having
a parallel bus line (3), and
at least two subscriber stations (10; 20; 30) which are connected to each other via the bus line (3) in such a way that they can communicate with each other,
wherein at least one of the at least two subscriber stations (10; 20; 30) is a subscriber station (20; 30) according to one of the preceding claims.

13. Method for error signalling for a message (4; 5; 50; 500) received in a serial bus system (1), wherein the method has the steps of:
creating, by means of a subscriber station (10; 20; 30) of the bus system (1), a message (4; 5; 50; 500) which is to be transmitted serially to at least one further subscriber station (20; 30; 10) of the bus system (1), and
transmitting the created message (4; 5; 50; 500) to at least one further subscriber station (20; 30; 10) of the bus system (1) via a bus line (3),
wherein there is provision in the transmitted message (4; 5; 50; 500) for an ACK time window (46) for an ACK signal (461) and/or a NACK time window (47) for a NACK signal (471) for signalling whether at least one further subscriber station (20; 30; 10) has or has not detected an error in the transmitted message (4; 5; 50; 500),
wherein the step of transmitting the created message (4; 5; 50; 500) involves no level being applied to the bus line (3) by the subscriber station (10; 20; 30) in the at least one provided time window (46, 47), and
wherein the method is **characterized in that**
a switch is made between two operating modes of a plurality of operating modes during operation of the bus system (1) depending on the frequentness of a detected error, said operating modes comprising the following operating modes:
an operating mode A) in which a signal which is identical for at least two of the subscriber stations (10; 20; 30) of the bus system (1) is transmitted as the ACK signal (461) and/or a signal which is identical for at least two of the subscriber stations (10; 20; 30) of the bus system (1) is transmitted as the NACK signal (471),
an operating mode B) in which the ACK signal (461) and/or the NACK signal (471) has a symbol which uniquely identifies the subscriber station (10; 20; 30) which has transmitted the signal (461; 471), and
an operating mode C) in which the NACK signal (471) is transmitted to the bus line (3) only when the subscriber station (10; 20; 30) has exclusive, collision-free access to the bus line (3) of the bus system (1) in the NACK time window (47).

14. Method for error signalling for a message (4; 5; 50; 500) received in a serial bus system (1), wherein the method has the steps of:
reading, by means of a subscriber station (10; 20; 30) of the bus system (1), a message (4; 5; 50; 500) which has been received serially from at least one further subscriber station (20; 30; 10) of the bus system (1) via a bus line (3) and which has an ACK time window (46) for an ACK signal (461) and/or a NACK time window (47) for a NACK signal (471) for signalling whether the at least one further subscriber station (20; 30; 10) has or has not detected an error in the transmitted message (4; 5; 50; 500), and
evaluating, by means of the subscriber station (10; 20; 30), the read message (4; 5; 50; 500) for errors, applying an ACK signal (461) in the ACK time window (46) when no errors have been detected in the received message (4; 5; 50; 500), and/or
applying a NACK signal (471) in the NACK time window (47) when an error has been detected in the received message (4; 5; 50; 500),
wherein the method is **characterized in that** a switch is made between two operating modes of a plurality of operating modes during operation of the bus system (1) depending on the frequentness of a detected error, said operating modes comprising the following operating modes:
an operating mode A) in which a signal which is identical for at least two of the subscriber stations (10; 20; 30) of the bus system (1) is transmitted as the ACK signal (461) and/or a signal which is identical for at least two of the subscriber stations (10; 20; 30) of the bus system (1) is transmitted as the NACK signal (471),
an operating mode B) in which the ACK signal (461) and/or the NACK signal (471) has a symbol which uniquely identifies the subscriber station (10; 20; 30) which has transmitted the signal (461; 471), and
an operating mode C) in which the NACK signal (471) is transmitted to the bus line (3) only when the subscriber station (10; 20; 30) has exclusive, collision-free access to the bus line (3) of the bus system (1) in the NACK time window (47).

## Revendications

1. Station périphérique (10 ; 20 ; 30) pour un système de bus série (1), comprenant
un dispositif de commande de communication (11 ; 21 ; 31) pour créer un message (4 ; 5 ; 50 ; 500) qui est à envoyer en série à au moins une autre station périphérique (20 ; 30 ; 10) du système de bus (1), et/ou pour lire un message (4 ; 5 ; 50 ; 500) qui a été reçu en série par au moins une autre station périphérique (20 ; 30 ; 10) du système de bus (1), et
un dispositif émetteur/récepteur (12 ; 22 ; 32) pour émettre le message créé (4 ; 5 ; 50 ; 500) sur une ligne de bus (3) à au moins une autre station périphérique (20 ; 30 ; 10) du système de bus (1) et/ou pour recevoir un message (4 ; 5 ; 50 ; 500) de la ligne de bus (3),
dans laquelle le dispositif de commande de communication (11 ; 21 ; 31) et/ou le dispositif émetteur/récepteur (12 ; 22 ; 32) sont configurés pour prévoir dans le message à envoyer (4 ; 5 ; 50 ; 500) une fenêtre temporelle ACK (46) pour un signal ACK (461) et/ou une fenêtre temporelle NACK (47) pour un signal NACK (471) en vue d'une signalisation si au moins une autre station périphérique (20 ; 30 ; 10) a détecté ou non une erreur dans le message émis (4 ; 5 ; 50 ; 500), et
dans laquelle le dispositif émetteur/récepteur (12 ; 22 ; 32) est configuré pour n'appliquer aucun niveau sur la ligne de bus (3) dans ladite au moins une fenêtre temporelle prévue (46, 47) lors de l'émission à ladite au moins une autre station périphérique (20 ; 30 ; 10), et
**caractérisée en ce que** la station périphérique (10 ; 20 ; 30) est configurée en cours de fonctionnement du système de bus (1) pour commuter en fonction de la fréquence d'une erreur détectée entre deux modes de fonctionnement parmi plusieurs modes de fonctionnement, qui comprennent les modes de fonctionnement suivants :
un mode de fonctionnement A) dans lequel, en tant que signal ACK (461), un signal est émis qui est identique pour au moins deux des stations périphériques (10 ; 20 ; 30) du système de bus (1), et/ou en tant que signal NACK (471), un signal est émis qui est identique pour au moins deux des stations périphériques (10 ; 20 ; 30) du système de bus (1),
un mode de fonctionnement B) dans lequel le signal ACK (461) et/ou le signal NACK (471) présentent un symbole qui identifie de manière univoque la station périphérique (10 ; 20 ; 30) qui a émis le signal (461 ; 471), et
un mode de fonctionnement C) dans lequel le signal NACK (471) n'est émis sur la ligne de bus (3) que si la station périphérique (10 ; 20 ; 30) dispose dans la fenêtre temporelle NACK (47) d'un accès exclusif, sans collision, à la ligne de bus (3) du système de bus (1).

2. Station périphérique (10 ; 20 ; 30) selon la revendication 1, dans laquelle le dispositif de commande de communication (11 ; 21 ; 31) et/ou le dispositif émetteur/récepteur (12 ; 22 ; 32) sont configurés pour espacer la fenêtre temporelle ACK (46) pour le signal ACK (461) et la fenêtre temporelle NACK (47) pour le signal NACK (471) d'une durée prédéterminée (T1) pendant laquelle le dispositif émetteur/récepteur (12 ; 22 ; 32) n'applique aucun niveau.

3. Station périphérique (10 ; 20 ; 30) selon la revendication 1 ou 2, dans laquelle la fenêtre temporelle ACK (46) est disposée temporellement avant ou temporellement après la fenêtre temporelle NACK (47) dans le message (4 ; 5 ; 50 ; 500).

4. Station périphérique (10 ; 20 ; 30) selon l'une quelconque des revendications précédentes, dans laquelle la fenêtre temporelle ACK (46) et la fenêtre temporelle NACK (47) ont des durées identiques ou différentes.

5. Station périphérique (10 ; 20 ; 30) selon l'une quelconque des revendications précédentes, dans laquelle le signal ACK (461) est un signal qui est identique pour au moins deux des stations périphériques (10 ; 20 ; 30) du système de bus (1), et/ou le signal NACK (471) est un signal qui est identique pour au moins deux des stations périphériques (10 ; 20 ; 30) du système de bus (1).

6. Station périphérique (10 ; 20 ; 30) selon l'une quelconque des revendications précédentes 1 à 5, dans laquelle le signal ACK (461) et/ou le signal NACK (471) présentent un symbole qui identifie de manière univoque la station périphérique (10 ; 20 ; 30) qui a émis le signal (461 ; 471).

7. Station périphérique (10 ; 20 ; 30) selon la revendication 6, dans laquelle la station périphérique (10 ; 20 ; 30) est configurée pour n'émettre le signal NACK (471) sur la ligne de bus (3) que si la station périphérique (10 ; 20 ; 30) dispose dans la fenêtre temporelle NACK (47) d'un accès exclusif, sans collision, à la ligne de bus (3) du système de bus (1).

8. Station périphérique (10 ; 20 ; 30) selon l'une quelconque des revendications précédentes, dans laquelle la station périphérique (10 ; 20 ; 30) est configurée pour un système de bus (1) dans lequel un accès exclusif, sans collision, est assuré au moins temporairement à une station périphérique (10, 20, 30) sur une ligne de bus (3) du système de bus (1).

9. Station périphérique (10 ; 20 ; 30) selon l'une quelconque des revendications précédentes, dans laquelle le message (4 ; 5 ; 50 ; 500) est un message CAN (4) ou un message CAN FD (5 ; 50 ; 500).

10. Station périphérique (10 ; 20 ; 30) selon l'une quelconque des revendications précédentes,
dans laquelle le dispositif de commande de communication (11 ; 21 ; 31) est configuré pour évaluer pour un message (4 ; 5 ; 50 ; 500) reçu d'une ligne de bus (3), qui a été émis par la station périphérique (10 ; 20 ; 30), la fenêtre temporelle ACK (46) pour le signal ACK (461) et/ou la fenêtre temporelle NACK (47) pour le signal NACK (471), et
dans laquelle le dispositif émetteur/récepteur (12 ; 22 ; 32) est configuré pour réémettre le message (4 ; 5 ; 50 ; 500) émis précédemment si le signal ACK (461) et/ou le signal NACK (471) signalent qu'une erreur a été détectée.

11. Station périphérique (10 ; 20 ; 30) selon l'une quelconque des revendications précédentes,
dans laquelle le dispositif de commande de communication (11 ; 21 ; 31) est configuré pour évaluer quant à des erreurs un message (4 ; 5 ; 50 ; 500) reçu d'une autre station périphérique (20 ; 30 ; 10) du système de bus (1) , et
dans laquelle le dispositif émetteur/récepteur (12 ; 22 ; 32) est configuré pour appliquer dans la fenêtre temporelle ACK (46) un signal ACK (461) si le dispositif de commande de communication (11 ; 21 ; 31) n'a détecté aucune erreur dans le message reçu (4 ; 5 ; 50 ; 500) ou pour appliquer dans la fenêtre temporelle NACK (47) un signal NACK (471) si le dispositif de commande de communication (11 ; 21 ; 31) a détecté une erreur dans le message reçu (4 ; 5 ; 50 ; 500).

12. Système de bus (1), comprenant
une ligne de bus parallèle (3), et
au moins deux stations périphériques (10 ; 20 ; 30) qui sont reliées ensemble par la ligne de bus (3) de façon à pouvoir communiquer les unes avec les autres,
dans lequel au moins l'une des au moins deux stations périphériques (10 ; 20 ; 30) est une station périphérique (20 ; 30) selon l'une quelconque des revendications précédentes.

13. Procédé de signalisation d'erreur pour un message (4 ; 5 ; 50 ; 500) reçu dans un système de bus série (1), le procédé présentant les étapes consistant à :
créer, par une station périphérique (10 ; 20 ; 30) du système de bus (1), un message (4 ; 5 ; 50 ; 500) qui est à émettre en série à au moins une autre station périphérique (20 ; 30 ; 10) du système de bus (1), et
émettre le message créé (4 ; 5 ; 50 ; 500) par une ligne de bus (3) à au moins une autre station périphérique (20 ; 30 ; 10) du système de bus (1),
dans lequel, dans le message émis (4 ; 5 ; 50 ; 500), une fenêtre temporelle ACK (46) pour un signal ACK (461) et/ou une fenêtre temporelle NACK (47) pour un signal NACK (471) sont prévues en vue d'une signalisation si au moins une autre station périphérique (20 ; 30 ; 10) a détecté ou non une erreur dans le message émis (4 ; 5 ; 50 ; 500),
dans lequel, à l'étape d'émission du message créé (4 ; 5 ; 50 ; 500) dans ladite au moins une fenêtre temporelle prévue (46, 47), la station périphérique (10 ; 20 ; 30) n'applique aucun niveau sur la ligne de bus (3), et
le procédé étant **caractérisé en ce qu'**en cours de fonctionnement du système de bus (1), une commutation en fonction de la fréquence d'une erreur détectée a lieu entre deux modes de fonctionnement parmi plusieurs modes de fonctionnement, qui comprennent les modes de fonctionnement suivants :
un mode de fonctionnement A) dans lequel, en tant que signal ACK (461), un signal est émis qui est identique pour au moins deux des stations périphériques (10 ; 20 ; 30) du système de bus (1), et/ou en tant que signal NACK (471), un signal est émis qui est identique pour au moins deux des stations périphériques (10 ; 20 ; 30) du système de bus (1),
un mode de fonctionnement B) dans lequel le signal ACK (461) et/ou le signal NACK (471) présentent un symbole qui identifie de manière univoque la station périphérique (10 ; 20 ; 30) qui a émis le signal (461 ; 471), et
un mode de fonctionnement C) dans lequel le signal NACK (471) n'est émit sur la ligne de bus (3) que si la station périphérique (10 ; 20 ; 30) dispose dans la fenêtre temporelle NACK (47) d'un accès exclusif, sans collision, à la ligne de bus (3) du système de bus (1).

14. Procédé de signalisation d'erreur pour un message (4 ; 5 ; 50 ; 500) reçu dans un système de bus série (1), le procédé présentant les étapes consistant à :
lire, par une station périphérique (10 ; 20 ; 30) du système de bus (1), un message (4 ; 5 ; 50 ; 500) qui a été reçu en série d'au moins une autre station périphérique (20 ; 30 ; 10) du système de bus (1) par une ligne de bus (3) et qui présente une fenêtre temporelle ACK (46) pour un signal ACK (461) et/ou une fenêtre temporelle NACK (47) pour un signal NACK (471) en vue d'une signalisation si ladite au moins une autre station périphérique (20 ; 30 ; 10) a détecté ou non une erreur dans le message émis (4 ; 5 ; 50 ; 500), et
évaluer, par la station périphérique (10 ; 20 ; 30), le message lu (4 ; 5 ; 50 ; 500) quant à des erreurs,
appliquer un signal ACK (461) dans la fenêtre temporelle ACK (46) si aucune erreur n'a été détectée dans le message reçu (4 ; 5 ; 50 ; 500), et/ou
appliquer un signal NACK (471) dans la fenêtre temporelle NACK (47) si une erreur a été détectée dans le message reçu (4 ; 5 ; 50 ; 500),
le procédé étant **caractérisé en ce qu'**en cours de fonctionnement du système de bus (1), une commutation est effectuée en fonction de la fréquence d'une erreur détectée entre deux modes de fonctionnement parmi plusieurs modes de fonctionnement, qui comprennent les modes de fonctionnement suivants :
un mode de fonctionnement A) dans lequel, en tant que signal ACK (461), un signal est émis qui est identique pour au moins deux des stations périphériques (10 ; 20 ; 30) du système de bus (1), et/ou en tant que signal NACK (471), un signal est émis qui est identique pour au moins deux des stations périphériques (10 ; 20 ; 30) du système de bus (1),
un mode de fonctionnement B) dans lequel le signal ACK (461) et/ou le signal NACK (471) présentent un symbole qui identifie de manière univoque la station périphérique (10 ; 20 ; 30) qui a émis le signal (461 ; 471), et
un mode de fonctionnement C) dans lequel le signal NACK (471) n'est émis sur la ligne de bus (3) que si la station périphérique (10 ; 20 ; 30) dispose dans la fenêtre temporelle NACK (47) d'un accès exclusif, sans collision, à la ligne de bus (3) du système de bus (1).
